# EUROPÄISCHE PATENTSCHRIFT

(11) **EP 1 041 697 B1**
(45) Veröffentlichungstag und Bekanntmachung des Hinweises auf die Patenterteilung: **02.05.2003**
(21) Anmeldenummer: 00104751.3
(22) Anmeldetag: 04.03.2000
(51) Int. Cl.: H02K 3/52, H02K 19/10

(54) **Reluktanzmaschine mit wenigstens zwei, je mit einer Erregerwicklung versehenen ausgeprägten Statorpolen und Verfahren zur Herstellung des Stators einer solchen Reluktanzmaschine**
Reluctance machine with at least two salient poles each having an exciter coil and method for manufacturing the stator of such a machine
Machine à réluctance avec au moins deux pôles saillants, chacun avec bobinage d'excitation et procédé de fabrication du stator d'une telle machine

(30) Priorität: 01.04.1999 DE 19914943
(43) Veröffentlichungstag der Anmeldung: 04.10.2000
(73) Patentinhaber: DaimlerChrysler AG, 70567 Stuttgart (DE)
(72) Erfinder: Bitsche, Otmar, 70329 Stuttgart (DE); Fürst, Matthias, 71384 Weinstadt (DE); Heller, Andreas, 71106 Magstadt (DE); König, Werner, 71083 Herrenberg (DE); Moch, Andreas, 74831 Gundelsheim (DE); Müller, Daniel, 73037 Göppingen (DE); Nickel, Armin, Dr., 73728 Esslingen (DE); Zieker, Roland, 73061 Ebersbach (DE)

(56) Entgegenhaltungen:
- GB-A- 249 213
- US-A- 4 633 114
- PATENT ABSTRACTS OF JAPAN vol. 008, no. 042 (P-256), 23. Februar 1984 (1984-02-23) -& JP 58 195118 A (HITACHI SEISAKUSHO KK), 14. November 1983 (1983-11-14)
- PATENT ABSTRACTS OF JAPAN vol. 012, no. 362 (E-663), 28. September 1988 (1988-09-28) -& JP 63 114540 A (HITACHI LTD), 19. Mai 1988 (1988-05-19)
- PATENT ABSTRACTS OF JAPAN vol. 002, no. 134 (E-070), 9. November 1978 (1978-11-09) -& JP 53 101602 A (MATSUSHITA ELECTRIC WORKS LTD), 5. September 1978 (1978-09-05)
- PATENT ABSTRACTS OF JAPAN vol. 004, no. 165 (E-034), 15. November 1980 (1980-11-15) -& JP 55 114161 A (MITSUBISHI ELECTRIC CORP), 3. September 1980 (1980-09-03)

## Beschreibung

Die Erfindung bezieht sich auf eine Reluktanzmaschine mit wenigstens zwei, je mit einer Erregerwicklung versehenen ausgeprägten Statorpolen und auf ein Verfahren zur Herstellung des Stators einer solchen Reluktanzmaschine.

Geschaltete Reluktanzmaschinen haben gewöhnlich zahlreiche ausgeprägte Pole sowohl im Stator als auch im Rotor. Jede Motorphase hat wenigstens ein Paar diametral einander gegenüber liegende Statorpole, auf denen jeweils eine Erregerwicklung angeordnet ist. Die beiden Erregerwicklungen auf den Statorpolen sind in Serie oder parallel geschaltet. Die Statorund Rotorpole bestehen aus lamellierten Eisenbleche. Wenn Erregerstrom in die Erregerwicklungen eingespeist wird, werden die Statorpole magnetisiert, wodurch magnetische Anziehungskräfte auf den Rotor ausgeübt werden, der sich unter Einfluß dieser Kräfte bewegt.

Die Statorpole bzw. -zähne sind integrale Bestandteile des Stators, d.h. Statorjoch und Statorzähne bestehen aus einem Stück. Die Erregerspulen werden selbsttragend ausgeführt oder sie werden von Spulenkästen bzw. Spulenrahmen gehalten. Die selbsttragenden Spulen werden auf eine zerlegbare Wickelform gewickelt und nach dem Entfernen der Form z.B. durch Bänder zusammengehalten.

Aus der EP 0 605 247 A2 ist eine Reluktanzmaschine bekannt, bei der an den axialen Enden der Spulenkörper der Erregerwicklungen Rastmittel angeordnet sind, in die ein starrer Ring eingeführt werden kann. Mit diesem werden die Spulenkörper im Stator festgelegt. Ein als Spulenkasten bzw. Spulenrahmen fungierender Wickelkörper stützt den Spulenkörper.

Aus der DE 42 20 209 A1 ist eine gattungsbildende Reluktanzmaschine bekannt, bei der auf der Innenseite der Wickelköpfe der Spulenwicklungen hohlzylindrische Spulenhalterungen eingepreßt werden, um die Wicklungen im Stator festzulegen.

Die als selbständige Einheiten hergestellten Erregerwicklungen werden über die Statorpole bzw. -zähne geschoben und danach auf diesen befestigt. Bei Stromfluß werden die Spulen von radialen Kräften beaufschlagt. Diese Kräfte müssen von den Befestigungsmitteln aufgefangen werden. Zur Befestigung der Spulen werden manuell Keile in die Hohlräume zwischen benachbarte Spulen getrieben, so daß die Spulen zwischen den Statorzähnen eingeklemmt werden. Eine solche Befestigung mittels Keilen ist aus der DE-PS 880 614 bekannt. Danach werden die Hohlräume in den Spulenwindungen und die Hohlräume zwischen den Statorzähnen und den Spulen mit Harz getränkt. Die Spulen werden auf die vorstehend beschriebene Art sicher und fest mit dem Stator verbunden.

Das Eintreiben der Keile zwischen die Spulen ist umständlich und insbesondere bei einem Reluktanzmotor mit zahlreichen Statorpolen sehr zeitraubend. Dabei werden die jeweiligen Spulen durch Anpressen an die Statorzähne in ihrer Stellung fixiert. Auf die Spulen wirkt dabei jeweils eine resultierende Kraft ein, die eine radial nach innen gerichtete Komponente hat. Die Reibungskraft zwischen Spule und Statorzähnen muß größer sein, da sonst die Spule keinen festen Sitz hat. Im übrigen beanspruchen die Keile einen Teil des Raums zwischen den benachbarten Statorzähnen. Dieser Raum steht nicht für die Spulenwindungen zur Verfügung.

Auch aus der GB 249 213 A ein Elektromotor bekannt, bei dem Erregerspulen mittels sich gegenüberstehenden, jeweils zwischen zwei benachbarten Spulen angeordneten Federn fixiert werden, wobei die Federn zusätzlich mit Klammern befestigt sind, um zu verhindern, daß diese sich bei Erschütterungen lösen können.

Aus der JP 58 195118 A ist ein Elektromotor bekannt, bei dem Erregerspulen fixiert werden, indem eine Blattfeder zwischen benachbarte Spule gesteckt wird, welche die Spulen dann in Position hält.

Weiterhin ist aus der US-A-4 633 114 ein Elektromotor bekannt, der wenigstens zwei, je mit einer Erregerspule versehene ausgeprägte Statorpole und einen Rotor aufweist, wobei eine Halterung zur Festlegung der Erregerspulen an den Statorpolen vorgesehen ist. Diese ist durch einen L-förmigen Körper gebildet, der eine Spule teilweise umfaßt und mit einem Ausleger zwischen Nutfuß und einer Einkerbung in der Nähe der Stirnfläche eines Statorzahns festgeklemmt werden kann und so die Spule zwischen zwei Statorzähnen festhält.

Der Erfindung liegt daher das Problem zugrunde, eine Reluktanzmaschine mit wenigstens zwei, je mit einer Erregerspule versehenen Statorpolen bereitzustellen, bei der auf einfache Weise auf alle Erregerspulen zugleich radiale, in Richtung des Statorjochs wirkende Kräfte ausgeübt werden, mit denen die Erregerspule in ihren Positionen an den Statorpolen gehalten werden, und ein Verfahren zur Herstellung einer solchen Reluktanzmaschine.

Das Problem wird bei einer Reluktanzmaschine der eingangs beschriebenen Art erfindungsgemäß dadurch gelöst, daß wenigstens ein radial nach außen federnder Sprengring mit seiner Außenseite unter Federvorspannung an den dem Rotor zugewandten Seiten der die Statorpole umgebenden Erregerspulen oder deren Wickelkörper anliegt. Der Sprengring übt eine radial nach außen gerichtete Kraft auf die Erregerspulen aus, unter deren Einfluß die Erregerspulen in Stellung gehalten werden, in denen sie mit ihren, dem Rotor abgewandten Seiten bzw. mit den entsprechenden Seiten des Spulenrahmens oder Spulenkastens am Rotorjoch anliegen. Die Erregerspulen werden durch die vom Sprengring ausgehende Kraft zwischen Sprengring und Joch des Stators fest gehalten, d.h. sie sind dazwischen eingespannt. Möglich ist auch, zwischen den dem Statorjoch und dem Rotor abgewandten Seiten der Erregerspulen oder deren Rahmen bzw. Spulenkästen Anschläge vorzusehen, an denen die entsprechenden Seiten der Erregerspulen bzw. Rahmen oder Spulenkästen dann unter dem Einfluß der Federkraft angedrückt werden. Das Anbringen von Sprengringen ist eine einfache Maßnahme, die nur wenige Handgriffe erfordert. Die Montage der Erregerspulen wird hierdurch wesentlich vereinfacht. Nachdem die Erregerspulen mit dem Sprengring in ihrer Stellung fixiert sind, können diese im Stator mit Gießharz getränkt werden. Ein weiterer Vorteil der Erfindung besteht darin, daß der gesamte Raum zwischen den Statorzähnen für die Wicklungen verfügbar ist.

Vorzugsweise ist in den Statorpolen in oder ungefähr in der Mitte der dem Rotor zugewandten Seite eine Nut für das Einlegen des Sprengrings vorgesehen. Bei dieser Vorrichtung wird der Sprengring auf einfache Weise auch in axialer Richtung der Reluktanzmaschine gehalten.

Bei einer zweckmäßigen Ausführungsform ist in axialer Richtung des Stators an jeder Seite der Statorzähne ein Sprengring vorgesehen, der gegen die dem Rotor zugewandte Seite der Spule, des Spulenrahmens oder des Spulenkastens angedrückt ist. Diese Ausführungsform ist vorteilhaft, wenn die Reluktanzmaschine eine größere axiale Länge hat, da dann die Andrückkraft auf die Spulen gleichmäßiger verteilt wird.

Der Sprengring besteht insbesondere aus einem magnetischen oder unmagnetischen Stahl. Im Sprengring entstehen daher keine Eisenverluste. Da der Sprengring kein geschlossener Ring ist, sind die im Betrieb auftretenden Wirbelstromverluste nicht von Bedeutung.

Das Problem wird für das Verfahren erfindungsgemäß durch die Merkmale im Patentanspruch 7 gelöst.

Die Erfindung wird im folgenden an Hand von in einer Zeichnung dargestellten Ausführungsbeispielen näher beschrieben.

Es zeigen:
- Fig. 1: einen schematischen Querschnitt durch eine dreiphasige Reluktanzmaschine,
- Fig. 2: die in Fig. 1 dargestellte Reluktanzmaschine schematisch im Längsschnitt längs der Linien I-I,
- Fig. 3: eine andere Ausführungsform einer Reluktanzmaschine schematisch im Längsschnitt.

Eine Reluktanzmaschine hat einen Rotor 1, der auf einer Welle 2 befestigt ist, die in einem Gehäuse 3 drehbar gelagert ist. Ein Stator 4 mit einem Statorjoch ist koaxial zum Rotor 1 innerhalb des Gehäuses 3 angeordnet und am Gehäuse 3 befestigt.

Rotor 1 und Stator 4 sind aus lamellierten Eisenblechen zusammengesetzt. Der Rotor 1 hat acht ausgeprägte Pole 5, 6, 7, 8, 9 10, 11, 12, die an der äußeren Peripherie in gleichmäßigen Abständen voneinander angeordnet sind. Im folgenden werden die Pole 5 bis 12 auch als Rotorzähne bezeichnet. Der Stator 4 hat ein hohlzylindrisches Joch 13, von dem aus sechs Magnetpole oder Statorpole 14, 15, 16, 17, 18, 19 radial nach innen ragen. Die Magnetpole 14 bis 19, die im folgenden auch Statorzähne genannt werden, sind in gleichmäßigen Abständen voneinander angeordnet. Der Luftspalt zwischen einander gegenüberstehenden Stator- und Rotorpolen beträgt beispielsweise Bruchteile eines Millimeters. Die Magnetpole 14 bis 19 haben jeweils parallele, in axialer Richtung des Gehäuses 3 sich erstreckende Seiten und bilden mit dem Joch 13 eine Einheit.

Auf den Statorpolen 14 bis 19 sind jeweils Erregerspulen 20, 21, 22, 23, 24, 25 angeordnet. Die folgenden Paare von Erregerspulen sind in Reihe geschaltet: 20 und 23, 21 und 24, 22 und 25.

Die Erregerspulen 20 bis 25 können jeweils selbsttragend ausgeführt sein oder durch Wickelkörper gehalten werden. An den radial außen liegenden Enden der Statorpole 14 bis 19 grenzen die Erregerspulen 20 bis 25 jeweils an das Joch 13 an. Gegen die Stirnflächen der Statorpole 14 bis 19 sind die Erregerspulen 20 bis 25 jeweils ein Stück in radialer Richtung nach außen zurückgesetzt. Die Erregerspulen 20 bis 25 haben jeweils rechteckige Querschnitte.

Bei der Montage der Reluktanzmaschine werden die Erregerspulen 20 bis 25 nach dem Zusammenfügen der Statorbleche und deren Befestigung jeweils manuell über die Statorpole 14 bis 19 geschoben.

In den Stirnflächen der Statorpole 14 bis 19 sind jeweils Nuten 26 vorhanden, die sich längs einer gedachten, nicht näher dargestellten Kreislinie erstrecken, die konzentrisch zu der Welle 2 bzw. dem Rotor 1 verläuft. In den Nuten 26 ist ein Sprengring 27 angeordnet, dessen Federkraft radial nach außen gerichtet ist. Der Sprengring 27 drückt mit seiner Außenseite 30 die Erregerspulen 20 bis 25 unter Federvorspannung nach außen, wodurch die Erregerspulen 20 bis 25 mit ihren, dem Rotor 1 abgewandten Seiten gegen das Joch 13 anliegen. Damit werden die Erregerspulen 20 bis 25 in ihren radialen Lagen fixiert. Die Erregerspulen 20 bis 25 können sich nicht mehr radial nach innen bewegen, so daß sichergestellt ist, daß sie nicht mehr in den Bereich der Pole 5 bis 12 des Rotors 1 gelangen können.

Nachdem die Erregerspulen 20 bis 25 auf den Statorpolen 14 bis 19 befestigt sind, werden die Erregerspulen 20 bis 25 mit Gießharz getränkt, so daß nach dem Aushärten eine feste Verbindung zwischen den Erregerspulen 20 bis 25 und den Statorpolen 14 bis 19 sowie dem Joch 13 hergestellt wird. Eine Befestigung der Erregerspulen 20 bis 25 mit Keilen ist nicht mehr notwendig. Daher steht der Raum zwischen zwei benachbarten Statorpolen bei Bedarf auch vollständig für die Wicklungen von Erregerspulen zur Verfügung.

Es können deshalb auch Erregerspulen mit einem von der Rechteckform abweichenden Querschnitt verwendet werden, wodurch sich z.B. in den Statorpolen ein größerer magnetischer Fluß und damit eine höhere Leistung der Geschalteten Reluktanzmaschine erreichen läßt.

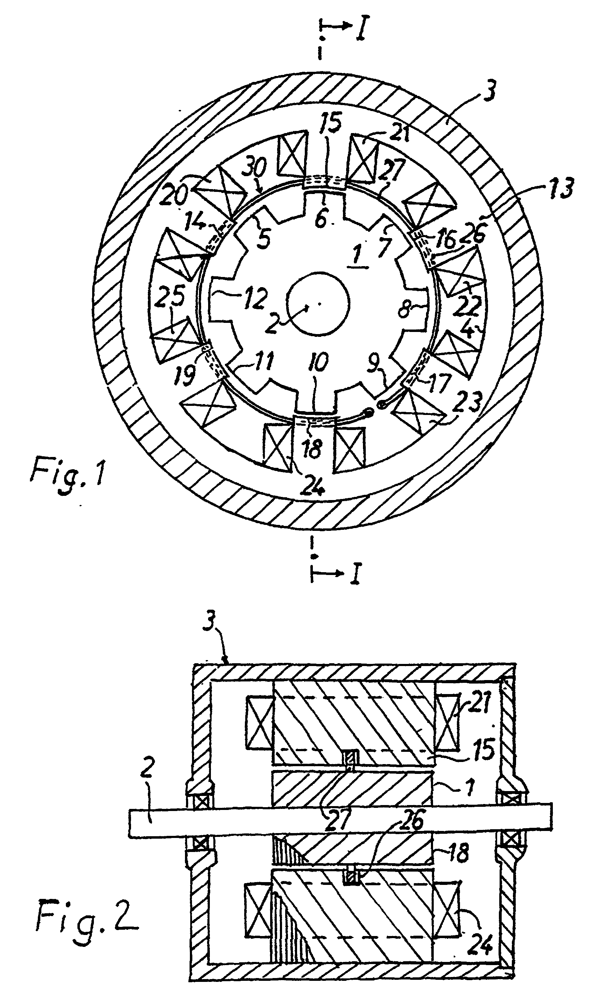

Bei Reluktanzmaschinen mit größerer axialer Länge können auch zwei oder mehr Sprengringe in Nuten der Statorpole angeordnet werden, um die Spulen in ihrer radialen Stellung zu fixieren. Die Fig. 2 zeigt die Geschaltete Reluktanzmaschine gemäß Fig. 1 im Längsschnitt. Der Aufbau des Rotors 1 und des Stators 4 aus lamellierten Eisenblechen ist in Fig. 2 angedeutet.

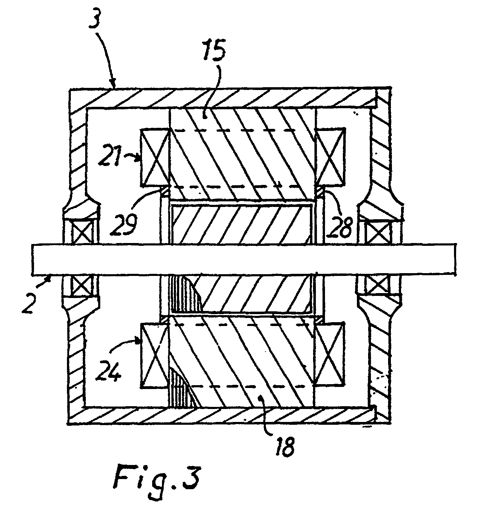

In der Fig. 3 ist eine andere Ausführungsform einer Reluktanzmaschine im Längsschnitt dargestellt. Für gleiche Bauteile der Ausführungsformen gemäß Fig. 1 und 2 und 3 wurden gleiche Bezugsziffern verwendet. Die Ausführungsform gemäß Fig. 3 stimmt mit derjenigen gemäß Fig. 1 und 2 bis auf wenige Unterschiede überein. Die Unterschiede bestehen darin, daß einerseits bei der Ausführungsform gemäß Fig. 3 keine Nut in den Statorpolen vorgesehen ist, und andererseits zwei Sprengringe 28, 29 beiderseits des Stators 4 in dessen axialer Richtung Kräfte auf die Erregerspulen in radialer Richtung nach außen ausüben. Die Ausführungsform gemäß Fig. 3 eignet sich besonders für Reluktanzmaschinen mit größerer axialer Länge. Die Sprengringe 28, 29 werden beim Tränken der Erregerspulen 20 bis 25 mit Harz fest mit den Erregerspulen und den Statorpolen 14 bis 19 verbunden.

Die Sprengringe 27, 28 und 29 können aus unmagnetischen oder magnetisierbarem Federstahl bestehen. Wenn eine Nut 26 im Stator 13 vorgesehen ist, dann wird der Sprengring vorzugsweise aus magnetisierbarem Stahl hergestellt, da er dann quasi als Statorblechbestandteil fungiert. Da die Sprengringe keinen geschlossenen Ring bilden, sind die durch Wirbelströme während des Laufs der Reluktanzmaschinen verursachten Verluste nur gering.

Bei der Herstellung einer Reluktanzmaschine der vorstehend beschriebenen Art wird der Stator aus lamellierten Eisenblechen hergestellt. Nach der Bildung des Statorblechpakets werden die als eigene Einheiten hergestellten Erregerspulen 20 bis 25 über die Statorpole 14 bis 19 geschoben. Diese Tätigkeit kann von Hand ausgeübt werden. Anschließend wird mit einem Werkzeug, z.B. einer Sprengringzange, der Sprengring 27 an die dem Statorjoch abgewandten Seiten der Erregerspulen angelegt. Dann wird das Werkzeug vom Sprengring 27 entfernt. Der Sprengring 27 drückt dann aufgrund seiner radialen Ausdehnung die Erregerspulen 20 bis 25 gegen das Joch 13 und fixiert sie in ihrer radialen Stellung. Anschließend werden die Hohlräume zwischen den Spulenwindungen sowie zwischen Erregerspulen 20 bis 25 und Statorpolen 14 bis 19 mit Gießharz ausgefüllt.

Nach dem Aushärten des Gießharzes wird die Reluktanzmaschine in üblicher Weise fertiggestellt.

Die erfindungsgemäße Anordnung ist vorteilhaft bei elektrischen Maschinen anzuwenden, bei denen in ähnlicher Weise Spulen einzusetzen sind wie bei einer Reluktanzmaschine.

Als alternatives Verfahren zur Befestigung bei gleichzeitiger Isolierung der Spulen in einer elektrischen Maschine mit Stator und Rotor mit einer Vergußmasse soll noch das (automatische) Druckgelierverfahren genannt werden. Das Verfahren und entsprechende Vorrichtungen werden u.a. in den Druckschriften DE 43 44 922 C2, DE 42 10 687 A1 und DE 2651837 A1 näher beschrieben.

Beim Verguß mit dem Druckgelierverfahren (Vollausguß) wird ein Stator und/oder Rotor vorgewärmt in ein Werkzeug mit einem abgeschlossenem Hohlraum formschlüssig aufgenommen und optional evakuiert. Anschließend wird unter sanftem Druck die Vergußmasse eingespritzt, welche sämtliche verbliebenen Hohlräume des Stators und/oder Rotors ausfüllt. Nach wenigen Minuten ist die Vergußmasse ausgehärtet und das Bauteil kann fertig isoliert entnommen werden. Das Verfahren erlaubt auch die Verwendung hochgefüllter Formmassen, wodurch die Eigenschaften der Vergußmasse (z.B. geringerer Schrumpf, Erhöhung der mechanischen Eigenschaften usw.) in weiten Bereichen optimiert werden können.

Die Herstellung von Formkörpern und eine Auswahl von geeigneten Vergußmassen (Ein- oder Zweikomponenten-Systeme) kann u.a. den Druckschriften EP 0 813 945 A2, EP 0 673 104 B1, US 5906784, WO9832138, EP 0 578 613 A2, EP 0 449 776 A2 entnommen werden.

Hervorzuheben ist die gute Maßhaltigkeit und die gute Bearbeitbarkeit des druckgelierten Verbundes im Vergleich zu einem Verbund von Spulen und Stator mit üblichen Gießharz.

Das Verfahren führt im weiteren zu einer Erhöhung der thermischen Leitfähigkeit des Bauteils und damit zu einer Leistungssteigerung neben einer größeren Geräuschdämpfung der dergestalt hergestellten elektrischen Maschine. Darüber hinaus kann das Verfahren ebenso in der Produktion von elektromagnetischer Ventilsteuerung, Starter/Generatoren und Elektrotraktionsantrieben vorteilhaft zur Anwendung kommen.

## Patentansprüche

1. Reluktanzmaschine mit wenigstens zwei, je mit einer Erregerspule versehenen, ausgeprägten Statorpolen und einem Rotor, wobei eine Halterung zur Festlegung der Erregerspulen an den Statorpolen vorgesehen ist,
**dadurch gekennzeichnet,**
**daß** wenigstens ein radial nach außen federnder Sprengring (27; 28; 29) mit seiner Außenseite (39) unter Federvorspannung an den dem Rotor (1) zugewandten Seiten der die Statorpole (14 - 19) umgebenden Erregerspulen (20 - 25) oder deren Wickelkörpern anliegt.

2. Reluktanzmaschine nach Anspruch 1,
**dadurch gekennzeichnet,**
**daß** die Erregerspulen (20 - 25) oder deren Wickelkörper zwischen dem Sprengring (27) und dem Statorjoch (4) eingespannt sind.

3. Reluktanzmaschine nach Anspruch 1 oder 2,
**dadurch gekennzeichnet,**
**daß** in den Statorpolen (14 - 19) in oder ungefähr in der Mitte der dem Rotor (1) zugewandten Seite eine Nut (26) für das Einlegen des Sprengrings (27) vorgesehen ist.

4. Reluktanzmaschine nach Anspruch 1 oder 2,
**dadurch gekennzeichnet,**
**daß** in axialer Richtung des Statorjochs (4) an jeder Seite der Statorpole (20 - 25) ein nach außen federnder Sprengring (28, 29) unter Federvorspannung mit seiner Außenseite an den dem Rotor (1) zugewandten Seiten der Erregerspulen oder den Wickelkörpern der Erregerspulen anliegt.

5. Reluktanzmaschine nach Anspruch 1,
**dadurch gekennzeichnet,**
**daß** die Sprengringe (28, 29) je mit einer flachen Seite neben den Statorpolen (14 - 19) angeordnet sind.

6. Reluktanzmaschine nach mindestens einem der vorhergehenden Ansprüche,
**dadurch gekennzeichnet,**
**daß** der Sprengring (27, 28, 29) jeweils aus unmagnetischem oder magnetisierbarem Federstahl besteht.

7. Verfahren zur Herstellung eines Stators einer Reluktanzmaschine mit wenigstens zwei, je mit einer Erregerwicklung versehenen, ausgeprägten Statorpolen,
**dadurch gekennzeichnet,**
**daß** nach dem Zusammenfügen der Eisenbleche des Stators auf den Statorpolen die Erregerwicklungen angeordnet werden, daß danach wenigstens ein Sprengring mit einem Werkzeug an die dem Joch des Stators abgewandten Seiten der Erregerspulen oder deren Wickelkörpern zugleich angelegt wird, daß anschließend das Werkzeug zum Anbringen des Sprengrings entfernt wird, daß sodann die Erregerspulen und die Zwischenräume zwischen den Erregerspulen mit Gießharz ausgefüllt werden, worauf ein Schritt zum Aushärten des Gießharzes folgt.

## Claims

1. Reluctance machine with at least two salient stator poles, each provided with a field coil, provided with means for locating the field coils on the stator poles,
**characterised in that**
at least one circlip (27; 28; 29) spring-loaded radially outwards is held with its outside (39) against the those sides of the field coils (20 - 25) surrounding the stator poles (14 - 19) or of their winding forms which face the rotor (1) under spring tension.

2. Reluctance machine according to claim 1,
**characterised in that**
the field coils (20 - 25) or their winding forms are clamped between the circlip (27) and the stator yoke (4).

3. Reluctance machine according to claim 1 or 2,
**characterised in that**
a groove (26) for installing the circlip (27) is provided in the stator poles (14 - 19) in the middle or approximately in the middle of the side facing the rotor (1).

4. Reluctance machine according to claim 1 or 2
**characterised in that**
on each side of the stator poles (20 - 25) in the axial direction of the stator yoke (4) a circlip (28, 29) spring-loaded outwards is held with its outside against the those sides of the field coils or of their winding forms which face the rotor (1) under spring tension.

5. Reluctance machine according to claim 1,
**characterised in that**
each circlip (28, 29) is arranged with its flat side adjacent to the stator poles (14 - 19).

6. Reluctance machine according to any of the preceding claims,
**characterised in that** the circlip (27, 28, 29) consists of non-magnetic or magnetisable steel.

7. Method for the production of a stator of a reluctance machine with at least two salient stator poles, each provided with a field winding,
**characterised in that**
the field windings are placed on the stator poles after the assembly of the stator laminations, **in that** at least one circlip is then placed with a tool on those sides of the field coils or their winding forms which are remote from the yoke of the stator, **in that** the tool for fitting the circlip is then removed, and **in that** the field coils and the cavities between the field coils are then filled with cast resin, followed by a step for curing the resin.

## Revendications

1. Moteur à réluctance comportant au moins deux pôles statoriques prononcés pourvus chacun d'une bobine d'excitation, et un rotor, une monture étant prévue pour fixer les bobines d'excitation sur les pôles statoriques,
**caractérisé en ce qu'**au moins un jonc (27 ; 28 ; 29) à effet élastique radialement vers l'extérieur s'appuie par son côté extérieur (39) sous précontrainte élastique contre les côtés, tournés vers le rotor (1), des bobines d'excitation (20 - 25) ou de leurs corps d'enroulement entourant les pôles statoriques (14 - 19).

2. Moteur à réluctance selon la revendication 1, **caractérisé en ce que** les bobines d'excitation (20 - 25) ou leurs corps d'enroulement sont serré(e)s entre le jonc (27) et la culasse de stator (4).

3. Moteur à réluctance selon l'une ou l'autre des revendications 1 et 2, **caractérisé en ce que** dans les pôles statoriques (14 à 19), au milieu ou approximativement au milieu du côté tourné vers le rotor (1), est prévue une gorge (26) pour poser le jonc (27).

4. Moteur à réluctance selon l'une ou l'autre des revendications 1 et 2, **caractérisé en ce qu'**en direction axiale de la culasse de stator (4), sur chaque côté des pôles statoriques (20 - 25), un jonc (28, 29) à effet élastique vers l'extérieur s'appuie sous précontrainte élastique par son côté extérieur contre les côtés, tournés vers le rotor (1), des bobines d'excitation ou des corps d'enroulement des bobines d'excitation.

5. Moteur à réluctance selon la revendication 1, **caractérisé en ce que** les joncs (28, 29) sont agencés chacun par un côté plat à côté des pôles statoriques (14 - 19).

6. Moteur à réiuctance selon l'une au moins des revendications précédentes, **caractérisé en ce que** chaque jonc (27, 28, 29) est constitué en acier ressort amagnétique ou magnétisable.

7. Procédé pour réaliser un stator d'un moteur à réluctance comportant au moins deux pôles statoriques prononcés pourvus chacun d'un enroulement d'excitation, **caractérisé en ce qu'**après assemblage des tôles de fer du stator sur les pôles statoriques, on agence les bobines d'excitation, **en ce qu'**on pose ensuite au moins un jonc au moyen d'un outil simultanément sur les côtés, détournés de la culasse du stator, des bobines d'excitation ou de leurs corps d'enroulement, **en ce qu'**ensuite on enlève l'outil pour agencer le jonc, **en ce que** l'on remplit alors les bobines d'excitation et les intervalles entre les bobines d'excitation avec de la résine fluide, suite à quoi on effectue une étape pour faire durcir la résine fluide.
